# FASCICULE DE BREVET EUROPEEN

(11) **EP 0 650 169 B1**
(45) Date de publication et mention de la délivrance du brevet: **18.06.1997**
(21) Numéro de dépôt: 94402360.5
(22) Date de dépôt: 20.10.1994
(51) Int. Cl.: G21C 17/00, G07C 1/20

(54) **Système de surveillance d'une installation industrielle**
Überwachungssystem für eine industrielle Anlage
Monitoring system for an industrial plant

(30) Priorité: 22.10.1993 FR 9312627
(43) Date de publication de la demande: 26.04.1995
(73) Titulaire: COMPAGNIE GENERALE DES MATIERES NUCLEAIRES, F-78140 Velizy Villacoublay (FR)
(72) Inventeur: Petitclerc, Jean-Louis, F-50110 Tourlaville (FR)
(74) Mandataire: Dubois-Chabert, Guy

(56) Documents cités:
- DE-A- 3 150 080
- FR-A- 2 655 468
- GB-A- 2 102 996
- US-A- 4 801 786
- US-A- 4 827 394
- PATENT ABSTRACTS OF JAPAN vol. 16, no. 223 (M-1253) 25 Mai 1992 & JP-A-04 041 308

## Description

### Domaine technique

La présente invention concerne un système de surveillance d'une installation industrielle. Elle s'applique notamment à la surveillance systématique d'installations nucléaires.

### Etat de la technique antérieure

Le fonctionnement automatique de certaines installations nucléaires nécessite une surveillance régulière. Une telle surveillance peut être réalisée par un opérateur effectuant une ronde suivant un parcours déterminé. Pendant cette ronde il relève les données délivrées par des capteurs placés en différents points de l'installation. Il contrôle et éventuellement modifie l'état fonctionnel d'équipements (par exemple, ouverture ou fermeture d'une vanne). A la fin de la ronde, les résultats des mesures effectuées peuvent être stockés et utilisés à des fins de maintenance préventive et corrective ou de traitement statistique. L'accès à certaines zones des installations pouvant être difficile, voire dangereux, aussi il est bon de s'assurer de la sécurité de l'opérateur.

La demande de brevet français de l'art connu FR-A-2 655 468 décrit un procédé de mise en oeuvre de ronde de surveillance d'un site nucléaire autorisant des actions de maintenance préventives. Un "dialogue" entre une unité centrale de surveillance et un opérateur permet de suivre le parcours de ce dernier de point de mesure en point de mesure et de s'assurer ainsi du bon déroulement d'une ronde. Il permet, en outre, de signaler en temps réel toute anomalie constatée lors d'une mesure et de prendre les dispositions nécessaires sans attendre le retour de l'opérateur. L'opérateur peut décider d'effectuer des mesures complémentaires ou des changements d'état fonctionnel d'équipement qui ne sont pas prévus à l'origine, lors de la définition du parcours de la ronde. Dans ce procédé l'opérateur est assisté dans ses décisions par un outil micro-informatique portable connecté par une liaison radio à l'unité centrale : à la suite de la détection d'une anomalie, il peut décider de suspendre sa ronde pour effectuer des opérations qui lui semblent nécessaires, tout en tenant informée l'unité centrale de surveillance.

L'invention a pour objet de simplifier et d'améliorer le système décrit dans cette demande de brevet de l'art antérieur.

### Exposé de l'invention

L'invention propose, à cet effet, un système de surveillance d'une installation industrielle permettant la mise en oeuvre de rondes par au moins un opérateur, ledit système comportant au moins un terminal central associé à un moyen d'émission réception, des étiquettes d'identification disposées en différents points de relevé situés en des emplacements déterminés de l'installation, et au moins un terminal portable, à la disposition de l'opérateur, associé à un moyen d'émission-réception de données pour communiquer avec le terminal central et à un moyen de lecture des étiquettes caractérisé en ce que ces étiquettes comprennent des étiquettes électroniques dont le contenu peut être lu et modifié par écriture, en ce que des étiquettes électroniques, disposées sur des équipements automatiques à contrôler, contiennent chacune une base de données actualisée propres aux caractéristiques desdits équipements, et en ce que le moyen de lecture associé à chaque terminal portable permet également une écriture dans ces étiquettes électroniques.

Avantageusement une étiquette électronique comprend une pastille qui contient une pile et un chip monté sur un microcircuit imprimé connecté aux deux pôles de la pile. Cette pastille communique avec l'extérieur par deux contacts : par une ligne de transmission bidirectionnelle des informations, le contact se faisant par la surface supérieure de la pastille, et par une ligne de référence, le contact se faisant par la périphérie ou le fond de la pastille. Une pastille comprend une mémoire non volatile protégée et une mémoire de type ROM.

En utilisant de telles étiquettes électroniques, l'invention permet de simplifier et d'améliorer de façon très importante le procédé décrit dans la demande de brevet citée précédemment. Ainsi les étiquettes électroniques disposées sur les équipements à contrôler peuvent chacune posséder une base de données nécessaires au contrôle de l'équipement correspondant, en contenant notamment ses caractéristiques, les seuils à respecter, la date et l'heure des derniers contrôles effectués. Différentes équipes (rondiers, maintenance...) peuvent, en effet, intervenir sur ces équipements. Ces étiquettes, qui permettent à la fois l'écriture et la lecture de données sont susceptibles de transmettre des informations d'une équipe à une autre, sans obliger les opérateurs à aller interroger une mémoire centrale. Elles permettent donc de tenir à jour une information décentralisée. Un parcours d'initialisation des étiquettes électroniques de chaque équipement est donc nécessaire lors de la mise en route du système de l'invention.

L'utilisation d'étiquettes électroniques implantées aux points de relevés permet d'éviter toute falsification : par exemple toute photocopie des étiquettes lorsque celles-ci sont réalisées par des codes barres.

Avec de telles étiquettes électroniques, un opérateur peut ajouter de nouveaux points dans sa ronde : une étiquette implantée sur un équipement peut, par exemple, dans des conditions de fonctionnement particulières, inciter l'opérateur à aller contrôler un autre équipement.

Avantageusement le terminal portable est disposé dans un boîtier de faibles dimensions et comporte :
- un micro-ordinateur ;
- un émetteur-récepteur de grande puissance ;
- un modem ;
couplés à :
- un lecteur d'étiquette électronique.

Avantageusement le terminal portable permet de gérer à la fois de la transmission de données et la communication phonie avec le terminal central et les éventuels autres terminaux portables. Il présente une grande autonomie grâce à la gestion de la consommation des différents éléments par le micro-ordinateur. En effet, le logiciel dans le micro-ordinateur coupe l'alimentation du modem et de l'émetteur-récepteur en cas de non-utilisation de l'émetteur-récepteur. De plus, le microprocesseur, l'émetteur-récepteur et le modem possèdent un dispositif de gestion d'alimentation réduisant la consommation au minimum dans les moments d'attente.

Le système de l'invention présente de nombreuses caractéristiques originales :
- les points de relevés peuvent être équipés d'étiquettes électroniques ;
- les appareils à contrôler peuvent être équipés d'étiquettes électroniques ;
- le terminal portable est équipé d'un lecteur d'étiquettes électroniques ; ce lecteur permet aussi de fournir des informations à l'étiquette : fonction "écriture" sur l'étiquette ;
- le logiciel du terminal portable définit (pour l'application ronde) les informations à lire/à saisir sur les équipements à contrôler. Ces informations sont saisies sur le terminal portable et transférées sur l'étiquette attachée à l'équipement concerné (fonction écriture). Les informations sont alors présentes simultanément sur l'étiquette, et en mémoire du terminal portable. Le contenu du terminal portable est, bien sûr, transféré en fin de ronde sur le terminal central pour traitement des informations.

Un tel système présente de nombreux avantages :
- on décentralise les informations, attachées aux appareils, sur ces appareils eux-mêmes ;
- avec l'étiquette électronique attachée à chaque appareil, on peut contrôler en cours de ronde n'importe quel appareil qui en est équipé, même s'il n'est pas prévu dans la ronde ;
- l'ordre de la ronde est complètement flexible ;
- les informations sont stockées directement sur l'étiquette attachée à un équipement ; pour avoir des informations sur les équipements, il n'y a pas besoin de retourner en salle de contrôle puisque tout est sur l'étiquette ;
- une expertise rapide est possible par lecture des informations de l'étiquette ;
- pour la maintenance (différente de l'application "rondier") on peut accéder directement aux informations concernant un appareil équipé d'une étiquette : il est possible de faire des relevés sans transfert de la ronde sur le terminal portable ;
- le lecteur d'étiquette présente un faible encombrement par rapport à un pistolet laser de lecture d'étiquettes de type "code à barres" ;
- pour une amélioration de la sécurité :
   - les risques de détérioration sont moindres que pour des étiquettes de type code à barres,
   - une étiquette de type "code à barres" peut être éditée plusieurs fois, ceci impliquant un risque d'erreur alors qu'avec une étiquette électronique, il n'y a pas de risque sur l'identification de l'appareil (appareil identifié avec certitude et de façon individuelle),
   - une étiquette de type "code à barres" étant sur un support papier, la lecture peut se dégrader avec le temps alors que la durée de vie d'une étiquette électronique est beaucoup plus importante (de l'ordre de plusieurs années).

### Brève description des dessins

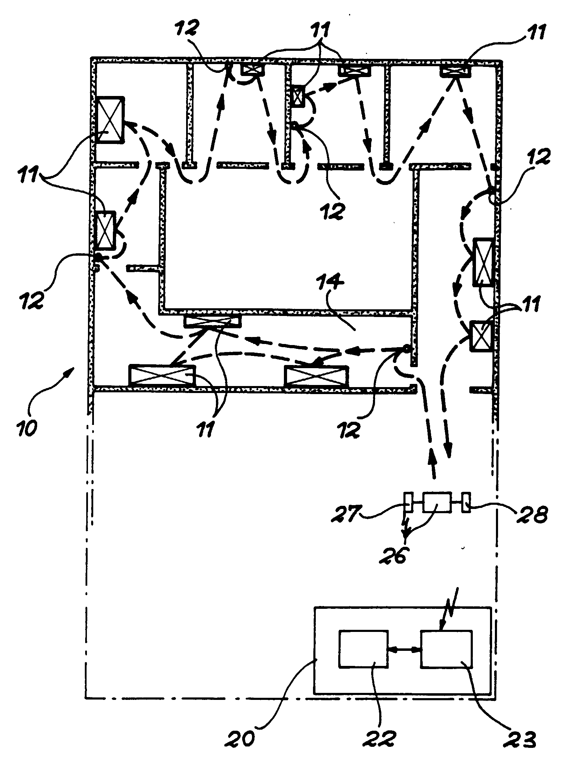

La figure représente schématiquement le système de surveillance de l'invention.

### Exposé détaillé des modes de réalisation

Comme représenté sur la figure, une installation industrielle 10 comporte des équipements automatiques (non représentés) dont le fonctionnement est contrôlé par des capteurs disséminés sur l'installation, mais regroupés autour de points de relevé 12. Des équipements 11 présentant un certain état fonctionnel sont aussi rattachés à ces points de relevé ; ces équipements peuvent être des vannes, des interrupteurs, ou autres.

Chaque point de relevé est localisé sur l'installation et marqué par une étiquette contenant un code d'identification du point.

Sur la figure, l'installation est divisée en plusieurs pièces séparées. Elle comprend aussi au moins une salle de contrôle 20 dans laquelle est installé au moins un ordinateur central 22 connecté à un émetteur/récepteur de radiofréquence 23.

Diverses données sont contenues dans un fichier général qui est tenu à jour après chaque ronde. Ce fichier enregistré dans l'ordinateur central 22 contient tous les points de relevé 12 auxquels sont attribués des références d'identification permettant leur localisation. Le fichier contient aussi la liste des capteurs et des équipements regroupés autour des points de relevé 12. Ces capteurs et équipements 11 sont repérés par des références d'identification. Diverses informations complètent cette liste dans le fichier, par exemple : le type de capteur (thermique, électrique, sensible aux irradiations, sensible aux fumées) ou d'équipement (vanne, interrupteur, ascenseur), la localisation géographique, les valeurs ou les caractéristiques normalement attendues, des seuils de tolérance, les contrôles à effectuer sur les données collectées lors des rondes, les valeurs relevées au cours des différentes rondes déjà effectuées, la date et l'heure de ces valeurs relevées, les unités de mesure employées et toute autre information permettant d'effectuer une surveillance efficace, comme par exemple des commentaires d'assistance à la décision concernant chacun des capteurs et équipements. Ce fichier permet, entre autre, l'affichage sur un moniteur vidéo d'un plan de l'installation muni de tous les points de relevé, les capteurs et équipements à surveiller.

Avant son départ pour une ronde, l'opérateur choisit dans le fichier central un enchaînement de points de relevé 12, de capteurs et d'équipements 11 à contrôler et/ou dont l'état fonctionnel est à modifier. Cet enchaînement est enregistré dans l'ordinateur central 22 : il définit le parcours de la ronde sur l'installation. Sont aussi enregistrées des informations concernant les points de relevé 12, les capteurs et équipements 11 à surveiller.

Des parcours type sont aussi disponibles. Ils évitent à l'opérateur de redéfinir à chaque départ son parcours complet. Ces parcours type peuvent être modifiés à volonté.

Lorsque l'enchaînement est établi, on définit une durée théorique nécessaire au trajet entre chaque point de relevé. Cette durée est enregistrée dans une mémoire de l'ordinateur central 22 pour chaque trajet entre deux points de relevé.

Chaque ronde démarre de la salle de contrôle 20, où l'opérateur recopie l'enchaînement établi ainsi que les informations s'y rattachant dans une mémoire d'un terminal portable 26 muni d'un écran associé à un émetteur/récepteur de radio fréquence 27. Ce micro-ordinateur 26 est également muni d'un dispositif 28 de lecture-écriture d'étiquette électronique. Le terminal 26, emporté lors de la ronde, guide l'opérateur en lui indiquant vers quel point de relevé 12 se diriger et les capteurs ou équipements à contrôler. Ainsi l'opérateur, muni d'un terminal portable, peut effectuer des rondes en allant d'un point de relevé à un autre.

A chaque passage à un point de relevé 12, l'opérateur lit l'étiquette portant la référence d'identification du point avec le dispositif de lecture-écriture 28. Cette lecture constitue une validation du passage de l'opérateur au point de relevé 12. Le terminal 26 enregistre la lecture et lui attribue un horaire de passage grâce à une horloge interne. Il affiche sur l'écran un message confirmant à l'opérateur que le point de relevé est bien celui prévu dans l'enchaînement constituant la ronde. Dans le cas contraire, l'affichage porté sur l'écran du terminal portable indique le point de relevé affiché et la nécessité de refaire sur place une lecture d'identification par lecture de l'étiquette.

A chaque lecture d'une référence d'identification d'un point de relevé, un signal de localisation est transmis par l'émetteur 27 connecté au terminal portable 26 vers le récepteur 23 connecté à l'ordinateur central 22. La réception du signal a pour effet de déclencher une horloge interne à l'ordinateur 22. Si la validation suivante n'est pas effectuée alors que la durée théorique entre deux validations, définie précédemment, est écoulée, une alarme est déclenchée par l'ordinateur central 22. Cette alarme peut être dans un premier temps, un signal transmis par l'émetteur 23 associé à l'ordinateur central 22 vers le récepteur 27 associé au terminal portable 26. Ce signal déclenche une émission sonore et/ou visuelle ou bien l'affichage d'un message sur l'écran du terminal 26. L'opérateur doit alors répondre par un message qu'il entre dans le terminal 26 et qui est transmis par émission radiofréquence à l'ordinateur 22. En cas de non réponse, l'ordinateur 22 peut alerter une équipe de secours qui intervient d'autant plus rapidement que la localisation de l'opérateur est connue.

A chaque point de relevé 12, l'opérateur relève les informations délivrées par les capteurs et les enregistre dans une mémoire du terminal portable 26. Il effectue aussi les contrôles et/ou les changements d'état fonctionnel des équipements 11 et enregistre des informations concernant ces équipements.

Pour chaque capteur ou équipement 11, le terminal 26 procède à une comparaison entre ces informations et les valeurs correspondant à un fonctionnement normal des installations. Cette comparaison ainsi que la définition de seuils de tolérance permet de détecter une anomalie de fonctionnement.

Après chaque saisie d'informations concernant les capteurs ou les équipements 11, l'opérateur doit effectuer une validation. Lorsque la valeur validée est hors-norme, le terminal 26 émet, par l'intermédiaire de l'émetteur 27, un message vers l'ordinateur central 22. Ce dernier, suivant le capteur déficient et le type d'anomalie, alerte une équipe de maintenance qui peut opérer rapidement et efficacement. Eventuellement, l'ordinateur central 22 peut automatiquement couper certains circuits électriques ou autres.

Lorsqu'un fonctionnement anormal est constaté, l'opérateur peut afficher les informations historiques concernant les mesures effectuées lors des précédentes rondes. Le terminal portable 26 affiche aussi les commentaires d'aide à la décision et l'opérateur peut, selon les cas, changer l'ordre de passage aux points de relevé 12, vérifier des capteurs ou équipements 11 non prévus lors de la définition de la ronde, voire interrompre sa ronde, tout en tenant informé l'ordinateur central 22 par l'intermédiaire de la liaison radio fréquence.

Pour chaque capteur ou équipement 11 contrôlé, l'opérateur a la possibilité d'enregistrer des commentaires sur le fonctionnement des installations. Ces commentaires favorisent une maintenance préventive efficace puisqu'ils permettent de prévenir les incidents. Par exemple, une équipe de maintenance alertée par ces commentaires peut remplacer telle ou telle pièce avant que celle-ci ne se détériore, dès qu'elle présente des signes de défaillance.

A la fin de la ronde, les informations lues sur les capteurs et contenues dans une mémoire du terminal portable 26 sont enregistrées dans une mémoire de l'ordinateur central 22 de manière à y être traitées ; le fichier central est ainsi mis à jour. Le traitement peut être une statistique sur un grand nombre de rondes, des évolutions des informations délivrées par les capteurs ou une analyse de dérive des indications relevées sur les capteurs. On obtient aussi, à volonté, une édition sur papier de toutes les informations.

Le procédé selon l'invention permet de suivre plusieurs opérateurs à partir de la même salle de contrôle. La liaison permanente entre l'ordinateur central et le terminal portable permet des prises de décision rapides et efficaces.

Grâce à cette liaison et aux informations contenues dans le terminal portable, l'opérateur peut analyser des situations anormales et agir en conséquence ; il est responsable de ses actes, tout en restant sous le contrôle de l'ordinateur central.

Avantageusement les étiquettes sont des étiquettes électroniques qui peuvent être disposées aux points de relevés, mais aussi sur les appareils dont les mesures sont à vérifier.

Ces étiquettes électroniques, disposées sur les équipements à contrôler, peuvent chacune contenir les résultats des derniers contrôles, des consignes éventuelles, les caractéristiques de l'équipement, les seuils à respecter, la date et l'heure des derniers contrôles effectués. Différentes équipes (rondiers, maintenance...) peuvent, en effet, intervenir sur ces équipements. Ces étiquettes, qui permettent à la fois l'écriture et la lecture de données sont susceptibles de transmettre des informations d'une équipe à une autre, sans obliger les opérateurs à aller interroger la mémoire centrale. Elles permettent donc de tenir à jour une information décentralisée. Un parcours d'initialisation des étiquettes électroniques de chaque équipement est nécessaire lors de la mise en route du système de l'invention.

Avec de telles étiquettes électroniques, un opérateur peut ajouter de nouveaux points dans sa ronde. Il est possible de relever des équipements non planifiés dans une ronde par exemple dans la pièce 14, car une étiquette électronique contient les éléments nécessaires qui permettent de décrire les éventuels contrôles supplémentaires à effectuer sur d'autres équipements.

Une étiquette électronique a une durée de vie de plusieurs années et n'est pas interchangeable car elle doit être initialisée avec les données de l'équipement, ceci garantie une sécurité supérieure au code à barres.

Les équipements gérés par les étiquettes électroniques n'ont pas besoin d'être déchargés au départ sur le terminal portable puisque l'étiquette électronique contient les éléments nécessaires pour contrôler l'équipement.

Les étiquettes de type code barres et les étiquettes électroniques peuvent coexister. Il est en effet possible d'utiliser les étiquettes électroniques pour certains équipements que l'on veut suivre plus particulièrement et de laisser les codes à barres pour le reste de la ronde. Dans ce cas, le terminal portable est également équipé d'un lecteur de codes à barres.

L'opérateur peut pendant sa ronde demander à tout instant le passage en mode phonie puis revenir en mode de transmission, de donnée. Le système de l'invention est donc capable de gérer à la fois les données et la phonie. Ce système permet de diminuer les risques d'erreurs de repérage de salles et d'équipements en cours de collecte grâce à l'utilisation de repères avec des étiquettes. Il permet également d'effectuer des traitements statistiques des relevés et de réaliser des calculs de tendances et de prévisions.

Dans un exemple de réalisation une étiquette électronique se présente sous forme d'une pastille circulaire en acier inoxydable qui contient une pile et un chip monté sur un microcircuit imprimé connecté aux deux pôles de la pile.

Chaque pastille communique avec l'extérieur par deux contacts :
- une ligne de transmission bidirectionnelle des informations (lecture/écriture). Ce contact se fait par la surface supérieure de la pastille ;
- une ligne de référence (0 volt). Ce contact se fait par la périphérie ou par le fond de la pastille.

La fiabilité du protocole de transmission utilisé permet de supprimer le risque d'erreur de lecture due à une éventuelle rupture de contact pendant la transaction.

Les deux contacts sont établis par une sonde très simple reliée par un câble ordinaire à deux conducteurs au microprocesseur de contrôle.

Le chip contient, par exemple, une mémoire non volatile protégée de par exemple 1152 bits, pouvant être lue et écrite. Cette mémoire est divisée en trois zones de 384 bits chacune. Chaque zone est protégée par un mot de passe de 64 bits autorisant la lecture ou l'écriture de la mémoire. L'étiquette comporte une zone de travail de 512 bits dont le contenu peut être vérifié par lecture, puis transféré soit par blocs de 8 octets, soit en totalité (64 octets), dans une des trois zones principales. Chaque pastille comporte en plus une ROM ("Read Only Memory") programmée par laser à la fabrication. Cette ROM contient un numéro unique de 48 bits plus un code de famille de 8 bits et un CRC ("Cyclic Redundancy Check") sur 8 bits.

Dans une réalisation avantageuse, le terminal portable utilisé par l'opérateur comporte les différentes parties suivantes :
- un micro-ordinateur miniature de type PC sous MS DOS ;
- un émetteur-récepteur de grande puissance ;
- un modem ;
ce terminal est couplé à un lecteur d'étiquette électronique, tout en étant intégré dans un boîtier de faibles dimensions.

Le terminal de l'invention présente plusieurs caractéristiques originales :
- l'intégration de l'ensemble dans un boîtier de faibles dimensions ;
- l'utilisation d'un circuit émetteur-récepteur de forte puissance ;
- la conception d'un nouveau modem permettant notamment une gestion multi-mobile, une gestion passage phonie/data et vice versa, un contrôle des flux sur quatre fils, une procédure de réveil automatique à l'initiative du micro-ordinateur ou du modem.

Le terminal portable utilisé pour le suivi radio doit permettre de suivre en permanence les déplacements du personnel sur l'installation, ainsi que de permettre le transfert d'informations en temps réel entre les salles de contrôle et les rondiers.

Il permet de gérer à la fois de la transmission de données et la communication phonie avec le terminal central et avec les autres terminaux portables. Il présente une grande autonomie grâce à la gestion de la consommation des différents éléments par le micro-ordinateur. En effet, le logiciel dans le micro-ordinateur coupe l'alimentation du modem et de l'émetteur-récepteur en cas de non-utilisation de l'émetteur-récepteur. De plus, le microprocesseur, l'émetteur-récepteur et le modem possèdent un dispositif de gestion d'alimentation réduisant la consommation au minimum dans les moments d'attente.

Avantageusement le terminal portable inclut :
- un modem fabriqué en technologie CMS ;
- un émetteur-récepteur conforme aux normes des différents pays où l'appareil doit être utilisé.

Il présente notamment les principales fonctions suivantes :
- ordinateur de collecte, de transfert et de traitement de données ;
- communication radio-phonie : émission/réception ;
- communication radio-data : émission/réception.

## Revendications

1. Système de surveillance d'une installation industrielle permettant la mise en oeuvre de rondes par au moins un opérateur, ledit système comportant au moins un terminal central (22) associé à un moyen d'émission réception (23), des étiquettes d'identification disposées en différents points de relevé (12) situés en des emplacements déterminés de l'installation, et au moins un terminal portable (26), à la disposition de chaque opérateur, associé à un moyen d'émission-réception (27) de données pour communiquer avec le terminal central et à un moyen de lecture (28) des étiquettes, caractérisé en ce que ces étiquettes comprennent des étiquettes électroniques dont le contenu peut être lu et modifié par écriture, en ce que des étiquettes électroniques, disposées sur des équipements automatiques à contrôler, contiennent chacune une base de données actualisée propres aux caractéristiques desdits équipements, et en ce que le moyen de lecture associé à chaque terminal portable permet également une écriture dans ces étiquettes électroniques.

2. Système selon la revendication 1, caractérisé en ce qu'une étiquette électronique comprend une pastille qui contient une pile et un chip monté sur un microcircuit imprimé connecté aux deux pôles de la pile, et en ce que cette pastille communique avec l'extérieur par deux contacts : par une ligne de transmission bidirectionnelle des informations, le contact se faisant par la surface supérieure de la pastille, et par une ligne de référence, le contact se faisant par la périphérie ou le fond de la pastille.

3. Système selon la revendication 2, caractérisé en ce qu'une pastille comprend une mémoire non volatile protégée et une mémoire de type ROM.

4. Système selon l'une quelconque des revendications précédentes, caractérisé en ce qu'il comprend un terminal portable comportant:
- un micro-ordinateur ;
- un émetteur-récepteur de grande puissance ;
- un modem ;
couplés à :
- un lecteur d'étiquette électronique.

5. Système selon la revendication 4, caractérisé en ce que le terminal portable permet de gérer à la fois de la transmission de données, et la communication phonie avec le terminal central, et avec les autres terminaux portables.

6. Système selon l'une quelconque des revendications 4 ou 5, caractérisé en ce que le logiciel dans le micro-ordinateur du terminal portable coupe l'alimentation du modem et de l'émetteur-récepteur en cas de non-utilisation de l'émetteur-récepteur, et en ce que le micro-ordinateur, I'émetteur-récepteur et le modem possèdent un dispositif de gestion d'alimentation réduisant la consommation au minimum dans les moments d'attente.

## Patentansprüche

1. überwachungssystem für eine industrielle Anlage, wobei wenigstens ein Operator Runden macht, umfassend: wenigstens ein zentrales Terminal (22), verbunden mit einer Sende-Empfangseinrichtung (23), Identifikationsetiketten, angeordnet an verschiedenen Ablesepunkten (12), die sich an bestimmten Stellen der Anlage befinden, und wenigstens ein tragbares Terminal (26), über das jeder Operator verfügt, verbunden mit einer Daten-Sende-Empfangseinrichtung (27), um mit dem zentralen Terminal zu kommunizieren, und mit einer Etiketten-Leseeinrichtung (28),
**dadurch gekennzeichnet,**
daß diese Etiketten elektronische Etiketten umfassen, deren Inhalt gelesen und durch Schreiben geändert werden kann, daß jede der elektronischen Etiketten, angebracht an zu kontrollierenden automatischen Ausrüstungsteilen, eine aktualisierte Datenbasis bzw. - bank mit den Charakteristika der besagten Ausrüstungsteile enthält, und daß die mit jedem tragbaren Terminal verbundenen Leseeinrichtung ebenfalls ein Schreiben in diesen elektronischen Etiketten ermöglicht.

2. System nach Anspruch 1, dadurch gekennzeichnet, daß eine elektronische Etikette einen Chip mit einer Batterie enthält und einen Chip, der auf eine gedruckte Mikroschaltung montiert ist, verbunden mit den beiden Polen der Batterie, und dadurch, daß dieser Chip durch zwei Kontakte mit der Außenseite kommuniziert: über eine bidirektionelle Datenübertragungsleitung, wobei der Kontakt durch die obere Oberfläche des Chips erfolgt, und über eine Referenz leitung, wobei der Kontakt durch den Rand oder den Boden des Chips erfolgt.

3. System nach Anspruch 2, dadurch gekennzeichnet, daß ein Chip einen geschützten nichtflüchtigen Speicher und einen Speicher des Typs ROM enthält.

4. System nach einem der vorangehenden Ansprüche, dadurch gekennzeichnet, daß es ein tragbares Terminal enthält, umfassend:
- einen Mikrocomputer;
- einen Sender-Empfänger mit großer Leistung;
- ein Modem;
gekoppelt mit:
- einem elektronischen Etikettenleser.

5. System nach Anspruch 4, dadurch gekennzeichnet, daß das tragbare Terminal ermöglicht, gleichzeitig die Übertragung der Daten und die Telephonie- bzw. Sprechfunkverbindung mit dem zentralen Terminal und den anderen tragbaren Terminals zu verwalten.

6. System nach einem der Ansprüche 4 oder 5, dadurch gekennzeichnet, daß die Software in dem Mikrocomputer des tragbaren Terminals die Versorgung des Modems und des Sender-Empfängers im Falle der Nichtbenutzung des Sender-Empfängers unterbricht bzw. abschaltet, und dadurch, daß der Mikrocomputer, der Sender-Empfänger und das Modem eine Versorgungsverwaltungseinrichtung besitzen, die den Verbrauch in den Wartezeiten auf ein Minimum reduziert.

## Claims

1. System for monitoring an industrial installation making it possible for at least one operator to perform rounds, said system incorporating at least one central terminal (22) associated with a transmission-reception means (23), identification labels located at different plotting or recording points (12) at predetermined locations within the installation, and at least one portable terminal (26) available to the operator associated with a data transmission-reception means (27) for communicating with the central terminal and a means (28) for reading the labels, characterized in that said labels comprise electronic labels, whose content can be read and modified by writing, wherein the electronic labels located on automatic equipments to be controlled, in each case contain a base for updated data concerning the characteristics of said equipments and wherein the reading means associated with each portable terminal also permits writing in said electronic labels.

2. System according to claim 1, characterized in that an electronic label comprises a capsule containing a battery and a chip installed on a printed microcircuit connected to the two poles of the battery and wherein said capsule communicates with the exterior by two contacts, namely by a bidirectional transmission line for informations, contact taking place by the upper surface of the capsule, and by a reference line, contact taking place by the periphery or bottom of the capsule.

3. System according to claim 2, characterized in that a capsule comprises a protected non-volatile memory and a ROM.

4. System according to any one of the preceding claims, characterized in that it comprises a portable terminal having a microcomputer, a high power transmitter-receiver and a modem coupled to an electronic label reader.

5. System according to claim 4, characterized in that the portable terminal makes it possible to control both data transmission and radiophony communication with the central terminal and with other portable terminals.

6. System according to either of the claims 4 and 5, characterized in that the software in the microcomputer of the portable terminal interrupts the power supply for the modem and the transmission-receiver when the latter is not in use and wherein the microcomputer, transmitter-receiver and modem have a power supply control device reducing consumption to a minimum when waiting.
